# EUROPEAN PATENT SPECIFICATION

(11) **EP 0 271 540 B1**
(45) Date of publication and mention of the grant of the patent: **30.03.1994**
(21) Application number: 87903953.5
(22) Date of filing: 29.05.1987
(51) Int. Cl.: H04N 11/10, H04N 7/093

(54) **MAC FORMAT WITH ALTERNATING DC LEVEL AND CLOCK RECOVERY SIGNALS**
MAC-FORMAT MIT ALTERNIERENDEN GLEICHSTROMPEGEL- UND TAKTWIEDERGEWINNUNGSSIGNALEN
FORMAT MAC AVEC SIGNAUX ALTERNES DE NIVEAU DE COURANT CONTINU ET DE RECUPERATION D'HORLOGE

(30) Priority: 03.06.1986 US 870036
(43) Date of publication of application: 22.06.1988
(73) Proprietor: SCIENTIFIC-ATLANTA, INC., Atlanta, GA 30348 (US)
(72) Inventor: RHODES, Charles, W., Atlanta, GA 30328 (US)
(74) Representative: Moore, Derek
(86) International application number: US8701258
(87) International publication number: WO8707810

(56) References cited:
- EP-A- 0 167 430
- EP-A- 0 170 267
- US-A- 4 245 235
- US-A- 4 268 853
- US-A- 4 446 482
- US-A- 4 533 936
- S.M.P.T.E. JOURNAL, vol. 94, no. 11, November 1985, pages 1166-1172, The Society of Motion Picture and Television Engineers, Inc., Scarsdale, New York,US; K. LUCAS: "B-MAC: a transmission standard for pay DBS"
- RUNDFUNKTECHNISCHE MITTEILUNGEN, vol. 29, no. 5, September/October 1985, pages 229-246, Norderstedt, DE; C. DOSCH: "D- und D2-MAC/Paket - die Mitglieder der MAC-Fernsehstandardfamilie mit geschlossener Basisbanddarstellung"
- IEEE TRANSACTIONS ON CONSUMER ELECTRONICS, vol. CE-29, no. 3, August 1983, pages 403-413, IEEE, New York, US; W.G. STALLARD: "C-MAC - A high quality television service for DBS"

## Description

The present invention is directed to improving immunity to channel distortions of multiplexed analog component television signals by independently transmitting a clock recovery signal and a DC restoration signal during the horizontal blanking interval of a video line. More particularly, the clock recovery signal and the DC restoration signal are transmitted on independent lines.

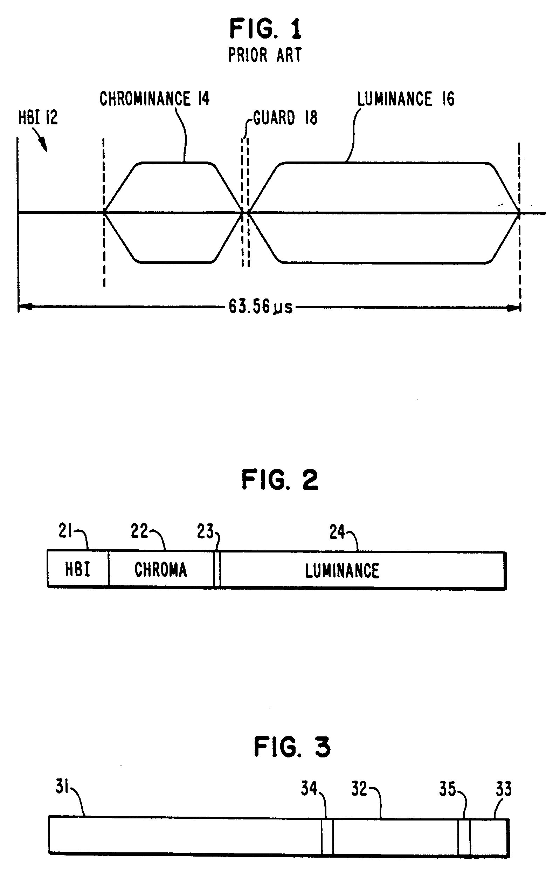

Time division multiplexed analog component (MAC) television signals, a typical line of which is shown with reference of Figure 1, includes a horizontal blanking interval (HBI) 12, in which no picture information is transmitted, followed by a chrominance signal 14 and a luminance signal 16, either of which may be time-compressed. Between the chrominance and luminance signals is a guard band 18 to assist in preventing interference between the two signals.

The MAC color television signal of Figure 1 is obtained by generating conventional luminance and chrominance signals (as would be done to obtain a conventional NTSC or other composite color television signals) and then sampling and storing them separately. Luminance is sampled at a luminance sampling frequency and stored in a luminance store, while chrominance is sampled at a chrominance sampling frequency and stored in a chrominance store. The luminance or chrominance samples may then be compressed in time by writing them into a store at their individual sampling frequency and reading them from the store at a higher frequency. A multiplexer selects either the luminance store or the chrominance store, at the appropriate time during the active line period, for reading, thus creating the MAC signal. If desired, audio samples may be transmitted during the HBI; these are multiplexed (and may be compressed) in the same manner as the video samples. The sample rate at which all samples occur in the multiplexed MAC signal is called the MAC sampling frequency.

In the transmission of all typical MAC signals, such as that described in SMPTE Journal, Volume 4 page 1166 - 1172, a reference clock frequency burst is also transmitted during the HBI. The reference burst is typically about ten cycles of a constant amplitude sinusoid at the MAC sampling frequency and is used at the receiver for both clock recovery and DC restoration (clamping). The frequency of the reference clock burst is used for clock recovery, while the average of the reference clock burst (ideally zero) is used for clamping. It is of great importance to accurately DC restore the video signal after transmission and clamp on the luminance (or pedestal) value upon which these reference clock burst sinusoids are superimposed. The chrominance values obtained for transmission are relative to a given reference brightness level, represented by the DC level of the signal. Accordingly, it is necessary that the received signal be referred to that reference level to provide accurate reconstruction of the received signal on a display. This reference level is hereinafter referred to as the DC restoration value.

US-A-4,533,936, Tiemann et al, discloses a system for encoding and decoding video signals to reduce the bandwidth required for transmission thereof over a transmission system such as a cable television channel, a broadcast channel, or a storage medium. The system transmits on a first line for a first video signal two chrominance components for the first and second lines of the first video signal. On a second line, information for a second, different video signal including two chrominance components for the second video signal and two luminance components for first and second lines of the second video signal is transmitted.

Several problems exist with the prior art method of obtaining the DC restoration value by averaging the reference clock burst. For example, if the discriminator at the receiver (Foster Sealy or FM discriminator) is misaligned, the average value of the reference clock burst is not at its ideal zero reference point. Additionally, if a large data spike either before or after the reference clock burst occurs, when low pass filter the clock burst, the data spike will cause interference and shift the DC level. Furthermore, any other distortion classically inherent in FM discriminators will cause an error to occur when the DC restoration value is obtained by averaging the reference clock burst.

This error, sometimes referred to as chrominance/luminance intermodulation, is a non-linear distortion particularly likely to be encountered in FM discriminators as a result of misalignment or drift. It may also occur in a wide variety of baseband video amplifiers, especially as a result of differences in circuit component value tolerances. A test signal has been developed specifically to measure this distortion in an FM demodulator. See Int'l Radio Consultative Comm., Recommendations And Reports Of The CCIR, Transmission of Sound Broadcasting and Television Signals Over Long Distances, Vol. XII, pps. 13, 20 (XVth Plkenary Assembly, Geneva 1982).

One solution to this problem is to provide a separate clock recovery signal and DC restoration signal in each transmitted line. If the reference clock burst and the DC restoration signal were both about 3 us per line, these two intervals would represent approximately 10% of the typical 63.5 us line. This approach is uneconomical; not only will the bandwidth required for transmission be increased, but the signal-to-noise ratio would also be increased, requiring a larger antenna reflector and/or a more costly Low Noise Amplifier.

The problems inherent with trying to obtain the DC restoration value from the reference burst lie from the fact that the two values are not related, as well as from the distortions classically inherent in FM discriminators.

According to the present invention there is provided a method of transmitting multiple lines of a frequency modulated time division multiplexed analog component video signal having a line which includes a luminance component, a chrominance component and a horizontal blanking interval which comprises either a clock recovery burst or a DC restoration level, but not both, characterised by the steps of:
transmitting a first line of the video signal wherein
the horizontal blanking interval comprises the clock recovery burst; and
transmitting N subsequent lines of the same video signal wherein
a) N is an integer greater than 1 and less than the number of lines per field in the video system, and
b) the horizontal blanking interval comprises the DC restoration reference level.

We have found that the integrity of the television receiver's system is not compromised if the clock recovery signal is not transmitted on every line. In fact, a substantial majority of the transmitted lines per frame need not have the clock recovery signal present for proper operation. Accordingly, the problems inherent in the prior art are avoided by independently transmitting the clock recovery signal and the DC restoration signal on separate lines during a portion of the horizontal blanking interval of the respective lines. The clock recovery signal and the DC restoration signal could be sent every Nth line with the DC restoration signal transmitted on lines therebetween.

A preferred embodiment of the invention will now be described by way of example, with reference to the accompanying drawings in whichg:
Figure 1 is an amplitude -- vs. -- time diagram of a single video line of a MAC signal,
Figure 2 illustrates a line of a MAC video signal,
Figure 3 illustrates a detailed view of the horizontal blanking interval of the line shown in Figure 2,
Figure 4 illustrates the block diagram of the circuitry required to recover the clock recovery signal and the DC restoration signal transmitted during the horizontal blanking interval of Figure 2.

With reference to Figures 2 through 4, the transmission and recovery of the clock recovery signal and DC the restoration signal will now be described. As shown in Figure 2, a line of a MAC video signal comprises a time segment for horizontal blanking interval (HBI) 21, chrominance component 22, guard band 23 and luminance component 24. Turning now to Figure 3, a detailed view of the horizontal blanking interval of the line shown in Figure 2 is now described with reference to the multiplexed analog component transmission system developed by the assignees of the present invention, typically referred to as B-MAC. As shown in Figure 3, the horizontal blanking interval comprises data segments 31, 32 and 33, separated by guard bands 34 and 35. In the preferred embodiment, the HBI comprises 78 symbols divided as 47 4-level data symbols for data segment 31; 20 4-level data symbols for data segment 32; 7 4-level data symbols for data segment 33; and 2 symbols for each guard band 34 and 35. Data segment 32 is used to store either the clock recovery signal or the DC restoration signal, depending upon the transmitted line in question. During transmission of the clock recovery signal, data segment 32, which is preferably approximately 2 us in duration, comprises a series of alternating minima and maxima of the 4-level data values and represents a clock recovery signal having constant amplitude and a frequency of the MAC sampling frequency. During the transmission of the DC restoration signal, data segment 32 preferably comprises twenty symbols of data at 50 IRE (i.e., the exact center of the dynamic range). Data segments 31 and 33 include other data, such as audio and/or scrambling information, a description of which is both known in the art and not necessary for a full understanding of the present invention.

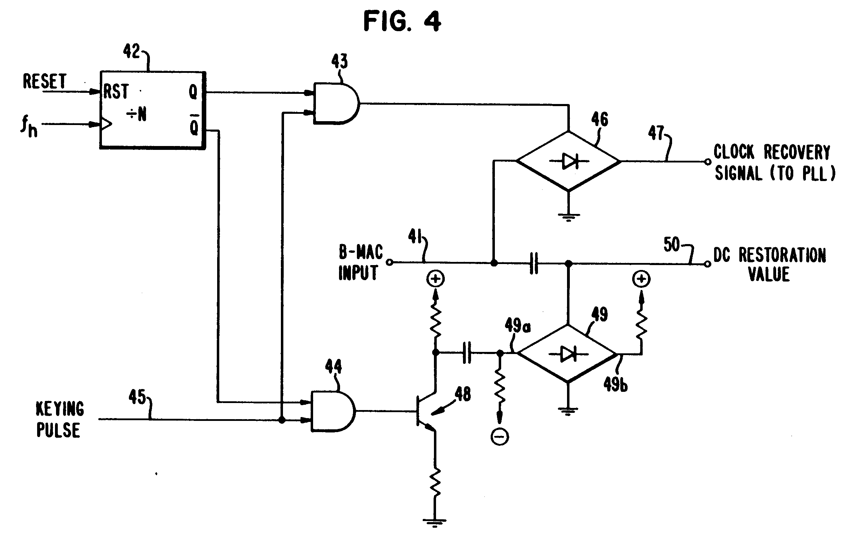

Turning now to Figure 4, the block diagram of the circuitry at the receiver required to recovery the clock recovery signal and the DC restoration signal which was transmitted during the horizontal blanking interval as just described is now discussed.

In the preferred embodiment, the clock recovery signal is transmitted on every other line, and the received B-MAC signal is input at line 41. Divide-by-N counter 42 is preferably a divide-by-2 counter and is reset according to the field rate reset pulse and is clocked by the line frequency fₕ. The outputs of counter 42 are arranged such that AND gates 43 and 44 are enabled mutually exclusive of each other by tying one of the two inputs to Q and Q-bar, respectively. The other input to AND gates 43 and 44 is the keying pulse of line 45 which occurs during data segment 32 (of Figure 3) of the horizontal blanking interval and has a duration of the twenty symbol data segment, preferably about 2 us. The keying pulses are generated by a key pulse generator (not shown), the construction of which will be obvious to those skilled in the art. When a first line is received at input 41, and assuming that the first line contains a clock recovery signal as described above, AND gate 43 is enabled and the clock recovery signal is allowed to pass through transmission gate 46 to the phase-locked loop circuitry (not shown) connected to line 47. During alternately occuring lines, AND gate 44 is enabled, thereby turning on transistor 48 and allowing the 50 IRE signal, produced by input sides 49a and 49b of transmission gate 49 to pass through the system at line 50. It is to be noted that the minima and maxima voltage values coupled to points 49a and 49b, respectively, represent the minima and maxima of the four-way data contained in the transmitted line of Figure 2.

Although the preferred embodiment has been described with reference to transmitting the clock recovery signal and the DC restoration signal on alternate lines, it is also possible to transmit the clock recovery signal on every third line, with the DC restoration signal transmitted on lines therebetween. In an embodiment of this type, divide-by-N counter 42 would be replaced with a divide-by-three counter, and the reset pulse into the counter would become the frame rate reset pulse (i.e., reset on line 1 of each field).

It is still further possible to transmit the clock recovery signal on every Nth line with the reset pulse into clock counter 42 preferably being the frame rate reset pulse provided that the number (N+1) is an integer multiple of the number of lines per frame. Additionally, it is also possible to transmit the DC restoration signal every Nth line, with the clock recovery signal transmitted on lines therebetween.

## Claims

1. A method of transmitting multiple lines of a frequency modulated time division multiplexed analog component video signal having a line which includes a luminance component, a chrominance component and a horizontal blanking interval which comprises either a clock recovery burst or a DC restoration level, but not both, characterised by the steps of:
transmitting a first line of the video signal wherein
the horizontal blanking interval comprises the clock recovery burst; and
transmitting N subsequent lines of the same video signal wherein
a) N is an integer greater than 1 and less than the number of lines per field in the video system, and
b) the horizontal blanking interval comprises the DC restoration reference level.

2. The method of claim 1 wherein the step of transmitting a first line of the video signal comprises transmitting a first line of a B-MAC video signal or a MAC video signal with 1) a luminance component for said first line of said video signal, 2) one of a first or second chrominance components for said video signal, 3) a clock recovery burst within the horizontal blanking interval of said first line of said video signal; and without a DC restoration level for said first line of said video signal; and
the step of transmitting N subsequent lines of the same video signal comprises transmitting a second line of the same said video signal with 1) a luminance component for said second line of said video signal, 2) the other of said first or second chrominance components for said video signal, and 3) a DC restoration level for said video signal; and without a clock recovery burst for said video signal.

3. The method of claim 1 or 2, wherein the DC restoration reference level is a signal corresponding to 50 IRE.

4. The method of claim 1 or 2, wherein the DC restoration reference level is a fixed level substantially above 100 IRE.

5. The method of claim 1 or 2, wherein the DC restoration reference level is a fixed level substantially below 0 IRE.

6. The method of any one of claims 1 to 5, wherein N = 2.

7. A transmitter for transmitting multiple lines of a frequency modulated time division multiplexed analog component video signal having a line which includes a luminance component, a chrominance component and a horizontal blanking interval which comprises either a clock recovery burst or a DC restoration level, but not both, characterised in that:
means for transmitting a first line of the video signal wherein the horizontal blanking interval comprises the clock recovery burst; and
means for transmitting N subsequent lines of the same video signal wherein
a) N is an integer greater than 1 and less than the number of lines per field in the video system, and
b) the horizontal blanking interval comprises the DC restoration reference level.

8. The transmitter of claim 7, wherein said means for transmitting a first line of the video signal comprises means for transmitting a first line of a B-MAC video signal or a MAC video signal with 1) a luminance component for said first line of said video signal, 2) one of a first or second chrominance components for said video signal, 3) a clock recovery burst within the horizontal blanking interval of said first line of said video signal; and without a DC restoration level for said first line of said video signal; and
said means for transmitting N subsequent lines of the same video signal comprises means for transmitting a second line of the said video signal with 1) a luminance component for said second line of said video signal, 2) the other of said first or second chrominance components for said video signal, and 3) a DC restoration level for said video signal; and without a clock recovery burst for said video signal.

9. The transmitter of claim 7 or 8, wherein N=2.

10. A video signal receiver for receiving multiple lines of a time division multiplexed analog component video signal having either a clock recovery burst or a DC restoration reference level transmitted during a predetermined portion of each line's horizontal blanking interval, the video signal receiver including a device for recapturing the clock recovery burst and the DC restoration reference level characterised by:
first pulse generating means (51) for generating a first enable pulse (45) whose timing and duration correspond substantially to the predetermined portion of each line's horizontal blanking interval;
second pulse generated means (42) having first (Q) and second (Q-bar) output ports for generating a second enable pulse having a duration corresponding to the transmitted line time and alternately outputting said second enabled pulse at said first and second output ports after every N line time durations;
first coincidence gate (43) coupled to said first pulse generating means (51) and the first output port (Q) of the second pulse generating means (42) to output a first gating signal during the coincidence of said first enable signal and said second enable signal at the first output port;
first gating means (46) coupled to said first coincidence gate (43) for receiving the transmitted video lines and outputting a portion of the video line corresponding to said first gating signal;
second coincidence gate (44) coupled to said first pulse generating means (51) and the second output port (Q-bar) of said second pulse generating means (42) to output a second gating signal during the coincidence of said first enable signal and said second enable signal at the second output port;
second gating means (49) coupled to said second coincidence gate (44) of outputting a reference level value signal corresponding to the duration of said second gating signal.

11. The device of claim 10, wherein N=1.

12. The device of claim 10, wherein N=2.

13. The device of claim 12, wherein the transmitted video lines are received at said second gating means.

14. The device of claim 13, wherein said portion of the video line corresponding to said first gating signal output from said first gating means is the clock recovery burst.

15. The device of claim 13, wherein said reference level value signal corresponding to the duration of said second gating signal output from said second gating means is the DC restoration reference level.

16. The device of claim 15, wherein said reference level value signal has a value of 50 IRE.

17. The device of claim 15, wherein said reference level value signal has a fixed value substantially above 100 IRE.

18. The device of claim 15, wherein said reference level value signal has a fixed value substantially below 0 IRE.

19. A method of recapturing a clock recovery burst and a DC restoration reference level in a video signal receiver adapted to receive multiple lines of a time division multiplexed analog component video signal having either said clock recovery burst or said DC restoration reference level transmitted during a predetermined portion of each line's horizontal blanking interval, the method comprising:
receiving a first line of said time division multiplexed analog component video signal having a clock recovery burst and carrying out a clock recovery operation, but not a DC restoration operation; and,
where N is an integer greater than one and less than the number of lines per field in the video system, receiving N subsequent lines of said time division multiplexed analog component video signal having a DC restoration reference level and carrying out a DC restoration operation, but not a clock recovery operation.

## Patentansprüche

1. Verfahren zum Übertragen einer Vielzahl von Zeilen eines frequenzmodulierten, im Zeitmultiplexbetrieb gebündelten, analoge Komponenten aufweisenden Videosignals mit einer Zeile, die einen Helligkeitsanteil, einen Farbwertanteil und eine Zeilenaustastlücke umfaßt, wobei die Zeilenaustastlücke entweder ein Taktwiedergewinnungssignal oder ein Gleichstrompegelwiedergewinnungssignal, aber nicht beide aufweist,
gekennzeichnet durch die folgenden Schritte:
Übertragung einer ersten Zeile des Videosignals, wobei die Zeilenaustastlücke das Taktwiedergewinnungssignal umfaßt; und
Übertragung einer Anzahl N nachfolgender Zeilen desselben Videosignals, wobei
a) N eine ganze Zahl größer als 1 und kleiner als die Anzahl der Zeilen pro Feld des Videosystems ist und
b) die Zeilenaustastlücke das Gleichstrombezugspegelwiedergewinnungssignal umfaßt.

2. Verfahren nach Anspruch 1, bei dem der Verfahrensschritt der Übertragung einer ersten Zeile des Videosignals die Übertragung einer ersten Zeile eines Videosignals im B-MAC- oder im MAC-Format umfaßt mit 1) einem Helligkeitsanteil für die erste Zeile des Videosignals, 2) einem von einem ersten oder zweiten Farbwertanteil für das Videosignal, 3) einem Taktwiedergewinnungssignal innerhalb der Zeilenaustastlücke der ersten Zeile des Videosignals; und ohne ein Gleichstrompegelwiedergewinnungssignal für die erste Zeile des Videosignals;
und der Verfahrensschritt der Übertragung einer Anzahl N nachfolgender Zeilen desselben Videosignals die Übertragung einer zweiten Zeile desselben Videosignals umfaßt mit 1) einem Helligkeitsanteil für die zweite Zeile des Videosignals, 2) dem anderen des ersten oder zweiten Farbwertanteiles für das Videosignal, 3) einem Gleichstrompegelwiedergewinnungssignal für das Videosignal und ohne ein Taktwiedergewinnungssignal für das Videosignal.

3. Verfahren nach Anspruch 1 oder 2, bei dem das Gleichstrombezugspegelwiedergewinnungssignal ein Signal ist, das 50 IRE entspricht.

4. Verfahren nach Anspruch 1 oder 2, bei dem das Gleichstrombezugspegelwiedergewinnungssignal ein fester Pegel im wesentlichen oberhalb von 100 IRE ist.

5. Verfahren nach Anspruch 1 oder 2, bei dem das Gleichstrombezugspegelwiedergewinnungssignal ein fester Pegel im wesentlichen unterhalb von 0 IRE ist.

6. Verfahren nach einem der Ansprüche 1 bis 5, bei dem die Anzahl N gleich 2 ist.

7. Sender zum Übertragen einer Vielzahl von Zeilen eines frequenzmodulierten, im Zeitmultiplexbetrieb gebündelten, analoge Komponenten aufweisenden Videosignals mit einer Zeile, die einen Helligkeitsanteil, einen Farbwertanteil und eine Zeilenaustastlücke aufweist, wobei die Zeilenaustastlücke entweder ein Taktwiedergewinnungssignal oder ein Gleichstrompegelwiedergewinnungssignal, aber nicht beide aufweist, gekennzeichnet durch
Mittel zum Übertragen einer ersten Zeile des Videosignals, wobei die Zeilenaustastlücke das Taktwiedergewinnungssignal umfaßt und
Mittel zum Übertragen einer Anzahl N nachfolgender Zeilen desselben Videosignals, wobei
a) N eine ganze Zahl größer als 1 und kleiner als die Anzahl der Zeilen pro Feld des Videosystems ist und
b) die Zeilenaustastlücke das Gleichstrombezugspegelwiedergewinnungssignal umfaßt.

8. Sender nach Anspruch 7, bei dem die Mittel zum Übertragen einer ersten Zeile des Videosignals Mittel zum Übertragen einer ersten Zeile eines Videosignals im B-MAC- oder im MAC-Format umfassen mit 1) einem Helligkeitsanteil für die erste Zeile des Videosignals, 2) einem von einem ersten oder zweiten Farbwertanteil für das Videosignal, 3) einem Taktwiedergewinnungssignal innerhalb der Zeilenaustastlücke der ersten Zeile des Videosignals; und ohne ein Gleichstrompegelwiedergewinnungssignal für die erste Zeile des Videosignals; und
daß die Mittel zum Übertragen einer Anzahl N nachfolgender Zeilen desselben Videosignals Mittel zum Übertragen einer zweiten Zeile des Videosignals umfassen mit 1) einem Helligkeitsanteil für die zweite Zeile des Videosignals, 2) dem anderen des ersten oder zweiten Farbwertanteiles für das Videosignal, 3) einem Gleichstrompegelwiedergewinnungssignal für das Videosignal; und ohne ein Taktwiedergewinnungssignal für das Videosignal.

9. Sender nach Anspruch 7 oder 8, bei dem die Anzahl N gleich 2 ist.

10. Videosignalempfänger zum Empfang einer Vielzahl von Zeilen eines im Zeitmultiplexbetrieb gebündelten, analoge Komponenten aufweisenden Videosignals mit entweder einem Taktwiedergewinnungssignal oder einem Gleichstrombezugspegelwiedergewinnungssignal, das während eines vorbestimmten Bereiches der Zeilenaustastlücke jeder Zeile übertragen wird, wobei der Videosignalempfänger eine Vorrichtung zur Wiedererlangung des Taktwiedergewinnungssignals und des Gleichstrombezugspegelwiedergewinnungssignals umfaßt, gekennzeichnet durch
erste Pulserzeugungsmittel (51) zur Erzeugung eines ersten Steuerimpulses (45), dessen Zeitpunkteinstellung und Dauer im wesentlichen dem vorbestimmten Bereich der Zeilenaustastlücke jeder Zeile entspricht; zweite Pulserzeugungsmittel (42) mit einem ersten (Q) und einem zweiten (Q) Ausgang zur Erzeugung eines zweiten Steuerimpulses mit einer Dauer, die der übertragenen Zeilenzeit entspricht, und zur abwechselnden Ausgabe des zweiten Steuerimpulses am ersten und am zweiten Ausgang nach jeweils einer Zeitdauer von N Zeilenzeiten;
ein erstes Koinzidenzgatter (43), das an die ersten Pulserzeugungsmittel (51) und den ersten Ausgang (Q) der zweiten Pulserzeugungsmittel (42) gekoppelt ist, um ein erstes Auswertesignal auszugeben während des Zusammentreffens des ersten Steuersignals und des zweiten Steuersignals am ersten Ausgang;
erste Auswertemittel (46), die an das erste Koinzidenzgatter (43) gekoppelt sind, zum Empfang der übertragenen Videozeilen und zur Ausgabe eines Bereiches der Videozeile, die dem ersten Auswertesignal entspricht,
ein zweites Koinzidenzgatter (44), das an die ersten Pulserzeugungsmittel (51) und an den zweiten Ausgang (Q) der zweiten Pulserzeugungsmittel (42) gekoppelt ist, um ein zweites Auswertesignal auszugeben während des Zusammentreffens des ersten Steuersignales und des zweiten Steuersignales am zweiten Ausgang; und
zweite Auswertemittel (49), die an das zweite Koinzidenzgatter (44) gekoppelt sind, zur Ausgabe eines Bezugspegelwertsignales, das der Dauer des zweiten Auswertesignales entspricht.

11. Videosignalempfänger nach Anspruch 10, bei dem die Anzahl N gleich 1 ist.

12. Videosignalempfänger nach Anspruch 10, bei dem die Anzahl N gleich 2 ist.

13. Videosignalempfänger nach Anspruch 12, bei dem die übertragenen Videozeilen an den zweiten Auswertemitteln empfangen werden.

14. Videosignalempfänger nach Anspruch 13, bei dem der Bereich der Videozeile, der dem ersten Auswertesignal entspricht und von den ersten Auswertemitteln ausgegeben wird, das Taktwiedergewinnungssignal ist.

15. Videosignalempfänger nach Anspruch 13, bei dem das Bezugspegelwertsignal, das der Dauer des zweiten Auswertesignales entspricht und von den zweiten Auswertemitteln ausgegeben wird, das Gleichstrombezugspegelwiedergewinnungssignal ist.

16. Videosignalempfänger nach Anspruch 15, bei dem das Bezugspegelwertsignal einen Wert von 50 IRE hat.

17. Videosignalempfänger nach Anspruch 15, bei dem das Bezugspegelwertsignal einen festen Wert im wesentlichen oberhalb von 100 IRE hat.

18. Videosignalempfänger nach Anspruch 15, bei dem das Bezugspegelwertsignal einen festen Wert im wesentlichen unterhalb von 0 IRE hat.

19. Verfahren zum Wiedererlangen eines Taktwiedergewinnungssignales und eines Gleichstrombezugspegelwiedergewinnungssignales in einem Videosignalempfänger, der daran angepaßt ist, eine Vielzahl von Zeilen eines im Zeitmultiplexbetrieb gebündelten, analoge Komponenten ausweisenden Videosignales zu empfangen mit entweder dem Taktwiedergewinnungssignal oder dem Gleichstrombezugspegelwiedergewinnungssignal, die während eines vorbestimmten Bereiches der Zeilenaustastlücke jeder Zeile übertragen werden, wobei das Verfahren die folgenden Schritte umfaßt:
Empfang einer ersten Zeile des im Zeitmultiplexbetrieb gebündelten, analoge Komponenten aufweisenden Videosignals mit einem Taktwiedergewinnungssignal und Durchführung einer Taktwiedergewinnungsoperation, nicht aber einer Gleichstromwiedergewinnungsoperation; und
Empfang einer Anzahl N nachfolgender Zeilen des im Zeitmultiplexbetrieb gebündelten, analoge Komponenten aufweisenden Videosignales mit einem Gleichstrombezugspegelwiedergewinnungssignal, wobei N eine ganze Zahl größer als 1 und kleiner als die Anzahl der Zeilen pro Feld des Videosystems ist, und Durchführung einer Gleichstromwiedergewinnungsoperation, nicht aber einer Taktwiedergewinnungsoperation.

## Revendications

1. Procédé de transmission de lignes multiples d'un signal vidéo à composantes analogiques à multiplexage temporel (MAC) et modulation de fréquence ayant une ligne qui contient une composante de luminance, une composante de chrominance et un intervalle horizontal de suppression qui comporte soit une salve de récupération d'horloge soit un niveau de restauration de courant continu, mais non les deux,
caractérisé en ce qu'il comprend les étapes de :
transmission d'une première ligne du signal vidéo dans laquelle l'intervalle horizontal de suppression comprend la salve de récupération d'horloge ; et
transmission de N lignes suivantes du même signal vidéo, dans lesquelles
a) N est un entier plus grand que 1 et plus petit que le nombre de lignes par trame dans le système vidéo, et
b) l'intervalle horizontal de suppression comprend le niveau de référence de restauration de courant continu.

2. Procédé suivant la revendication 1, dans lequel l'étape de transmission d'une première ligne du signal vidéo comprend la transmission d'une première ligne d'un signal vidéo B-MAC ou d'un signal vidéo MAC avec (1) une composante de luminance pour ladite première ligne dudit signal vidéo, (2) une d'une première ou d'une deuxième composantes de chrominance pour ledit signal vidéo, (3) une salve de récupération d'horloge, à l'intérieur de l'intervalle de suppression horizontal de ladite première ligne dudit signal vidéo ; et sans niveau de restauration de courant continu pour ladite première ligne dudit signal vidéo ; et
l'étape de transmission de N lignes suivantes du même signal vidéo comprend la transmission d'une deuxième ligne du même dit signal vidéo avec (1) une composante de luminance pour ladite deuxième ligne dudit signal vidéo, (2) l'autre desdites première ou deuxième composantes de chrominance pour ledit signal vidéo , et (3) un niveau de restauration de courant continu pour ledit signal vidéo ; et sans salve de récupération d'horloge pour ledit signal vidéo.

3. Procédé suivant la revendication 1 ou 2, dans lequel le niveau de référence de restauration de courant continu est un signal correspondant à 50 IRE.

4. Procédé suivant la revendication 1 ou 2, dans lequel le niveau de référence de restauration de courant continu est un niveau fixe sensiblement supérieur à 100 IRE.

5. Procédé suivant la revendication 1 ou 2, dans lequel le niveau de référence de restauration de courant continu est un niveau fixe sensiblement inférieur à 0 IRE.

6. Procédé suivant une quelconque des revendications 1 à 5, dans lequel N = 2.

7. Transmetteur pour la transmission de lignes multiples d'un signal vidéo à composantes analogiques à multiplexage temporel et modulation de fréquence ayant une ligne qui contient une composante de luminance, une composante de chrominance et un intervalle horizontal de suppression de faisceau qui comprend soit une salve de récupération d'horloge soit un niveau de restauration de courant continu, mais non les deux,
caractérisé en ce qu'il comprend :
des moyens de transmission d'une première ligne du signal vidéo dans laquelle l'intervalle horizontal de suppression comprend la salve de récupération d'horloge ; et
des moyens de transmission de N lignes suivantes du même signal vidéo dans lesquelles :
a) N est un entier plus grand que 1 et plus petit que le nombre de lignes par trame dans le système vidéo, et
b) l'intervalle horizontal de suppression comprend le niveau de référence de restauration de courant continu.

8. Transmetteur suivant la revendication 7, dans lequel lesdits moyens de transmission d'une première ligne du signal vidéo comprennent des moyens de transmission d'une première ligne d'un signal vidéo B-MAC ou d'un signal vidéo MAC avec 1) une composante de luminance pour ladite première ligne dudit signal vidéo, 2) une d'une première ou d'une deuxième composantes de chrominance pour ledit signal vidéo, 3) une salve de récupération d'horloge à l'intérieur de l'intervalle horizontal de suppression de ladite première ligne dudit signal vidéo ; et sans un niveau de restauration de courant continu pour ladite première ligne dudit signal vidéo ; et
lesdits moyens de transmission de N lignes suivantes du même signal vidéo comprennent des moyens de transmission d'une deuxième ligne dudit signal vidéo avec 1) une composante de luminance pour la dite deuxième ligne dudit signal vidéo, 2) l'autre desdites première ou deuxième composantes de chrominance pour ledit signal vidéo, et 3) un niveau de restauration de courant continu pour ledit signal vidéo ; et sans une salve de récupération d'horloge pour ledit signal vidéo.

9. Transmetteur suivant la revendication 7 ou 8, dans lequel N = 2.

10. Récepteur de signal vidéo pour recevoir des lignes multiples d'un signal vidéo à composantes analogiques à multiplexage temporel ayant soit une salve de récupération d'horloge soit un niveau de référence de restauration de courant continu transmis pendant une partie prédéterminée de l'intervalle de suppression horizontal de chaque ligne, le récepteur de signal vidéo incluant un dispositif de recapture de la salve de récupération d'horloge et du niveau de référence de restauration de courant continu,
caractérisé en ce qu'il comprend :
des premiers moyens de génération d'impulsion (51) pour engendrer une première impulsion d'activation (45) dont le séquencement de temps et la durée correspondent sensiblement à la partie prédéterminée de l'intervalle de suppression horizontal de chaque ligne ;
des deuxièmes moyens de génération d'impulsion (42) ayant un premier (Q) et un deuxième (Q̅) ports de sortie, pour engendrer une deuxième impulsion d'activation ayant une durée correspondant au temps de transmission de ligne, et émettre alternativement ladite deuxième impulsion d'activation auxdits premier et deuxième ports de sortie,toutes les N durées de ligne ;
une première porte de coïncidence (43) couplée auxdits premiers moyens de génération d'impulsion (51) et audit premier port de sortie (Q) des deuxièmes moyens de génération d'impulsion (42), pour fournir un premier signal de validation pendant la coïncidence dudit premier signal d'activation et dudit deuxième signal d'activation au premier port de sortie ;
des premiers moyens de passage commandé (46) couplés à ladite première porte de coïncidence (43), pour recevoir les lignes vidéo transmises et transmettre une partie de la ligne vidéo correspondant audit premier signal de validation ;
une deuxième porte de coïncidence (44) couplée auxdits premiers moyens de génération d'impulsion (51) et au deuxième port de sortie (Q̅) desdits deuxièmes moyens de génération d'impulsion (42) pour fournir un deuxième signal de validation pendant la coïncidence dudit premier signal d'activation et dudit deuxième signal d'activation au deuxième port de sortie ; et
des deuxièmes moyens de passage commandé (49) couplés à ladite deuxième porte de coïncidence (44) pour fournir un signal de valeur de niveau de référence correspondant à la durée dudit deuxième signal de validation.

11. Dispositif suivant la revendication 10, dans lequel N = 1.

12. Dispositif suivant la revendication 10, dans lequel N = 2.

13. Dispositif suivant la revendication 12, dans lequel les lignes vidéo transmises sont reçues auxdits deuxièmes moyens de passage commandé.

14. Dispositif suivant la revendication 13, dans lequel ladite partie de la ligne vidéo correspondant audit premier signal de validation, fournie par lesdits premiers moyens de passage commandé, est la salve de récupération d'horloge.

15. Dispositif suivant la revendication 13, dans lequel ledit signal de valeur de niveau de référence correspondant à la durée dudit deuxième signal de validation, fourni par lesdits deuxièmes moyens de passage commandé, est le niveau de référence de restauration de courant continu.

16. Dispositif suivant la revendication 15, dans lequel ledit signal de valeur de niveau de référence a une valeur de 50 IRE.

17. Dispositif suivant la revendication 15, dans lequel ledit signal de valeur de niveau de référence a une valeur fixe sensiblement supérieure à 100 IRE.

18. Dispositif suivant la revendication 15, dans lequel ledit signal de valeur de niveau de référence a une valeur fixe sensiblement inférieure à 0 IRE.

19. Procédé de recapture d'une salve de récupération d'horloge et d'un niveau de référence de restauration de courant continu dans un récepteur de signal vidéo prévu pour recevoir des lignes multiples d'un signal vidéo à composantes analogiques à multiplexage temporel ayant soit unedite salve de récupération d'horloge soit undit niveau de référence de restauration de courant continu transmis pendant une partie prédéterminée de l'intervalle horizontal de suppression de faisceau de chaque ligne, le procédé comprenant :
la réception d'une première ligne du signal vidéo à composantes analogiques à multiplexage temporel ayant une salve de récupération d'horloge et l'exécution d'une opération de récupération d'horloge, mais non d'une opération de restauration de courant continu ; et
N étant un entier plus grand que 1 et plus petit que le nombre de lignes par trame dans le système vidéo,la réception de N lignes suivantes du signal vidéo à composantes analogiques à multiplexage temporel ayant un niveau de référence de restauration de courant continu et l'exécution d'une opération de restauration de courant continu, mais non d'une opération de récupération d'horloge.
